# EUROPEAN PATENT SPECIFICATION

(11) **EP 2 749 172 B1**
(45) Date of publication and mention of the grant of the patent: **25.07.2018**
(21) Application number: 14161513.8
(22) Date of filing: 14.02.2011
(51) Int. Cl.: A23C 11/04, A23C 17/00

(54) **Filled milk product comprising solids of sweet buttermilk**
Gefülltes Milchprodukt enthaltend trockenes Material von süsser Buttermilch
Produit de lait emballé comprenant des solides de babeurre doux

(30) Priority: 12.02.2010 US 303776 P; 10.12.2010 DK 201070541
(43) Date of publication of application: 02.07.2014
(62) Divisional of application: 11702852.2
(73) Proprietor: Arla Foods Amba, 8260 Viby J (DK)
(72) Inventor: KIERBYE, Ida, 6990 Ulfborg (DK); TOFT, Jacob Randeris, 8260 Viby J (DK)
(74) Representative: Guardian IP Consulting I/S

(56) References cited:
- FR-A1- 2 017 282
- GB-A- 730 887
- GB-A- 2 163 445
- US-A- 1 432 699
- US-A- 4 446 164
- US-A- 5 962 062
- US-A- 5 993 873
- Anonymous: "Non-dairy extra creamer", MINTEL, 24 July 2007 (2007-07-24), pages 1-3, XP055342495, Retrieved from the Internet: URL:www.gnpd.com [retrieved on 2017-02-06]

## Description

### FIELD OF THE INVENTION

The present invention relates to powdered filled milk products comprising sweet buttermilk solids, vegetable lipid and one or more additional carbohydrate sources. The invention furthermore relates to a method of preparing such filled milk products.

### BACKGROUND

A filled milk is a special milk product which has been added vegetable lipids to replace or supplement some of the milk fat of the product. Filled milk has long been perceived as a low price alternative to regular milk, and it has been a challenge to provide filled milk products which have organoleptic and nutritional properties comparable to those of regular milk.

### Prior art:

US 4,446,164 discloses a milk product based on whey proteins, non-fat milk-solids, vegetable oil, and sugar.

US 5,993,873 discloses a food product powder comprising lipid (e.g. palm oil), an emulsifier (e.g. caseinate or sweet buttermilk powder), and a milk powder.

### SUMMARY OF THE INVENTION

An object of the invention is to provide a filled milk product having improved organoleptic properties and/or an improved nutritional profile.

The present inventors have found that filled milk products containing significant amounts of sweet buttermilk solids surprisingly have an improved taste relative to filled milk products of the prior art. The improved taste is particularly pronounced after long storage time at elevated temperature. Thus, the storage stability at tropical temperatures of the present filled milk product has surprisingly been found to be much better than the stability of prior art filled milk products.

Therefore, an aspect of the invention relates to a powdered filled milk product comprising sweet buttermilk solids in an amount of at least 5% (w/w) relative to the dry weight of the filled milk product, a vegetable lipid source, and a first carbohydrate source, wherein said first carbohydrate source is a lactose-containing or lactose-derived carbohydrate source, or comprises or consists of milk permeate and/or milk permeate solids, or comprises or consists of whey permeate and/or whey permeate solids, or is a carbohydrate sweetener, and wherein the filled milk product, when standardized to a solids content corresponding to 10 g powdered filled milk product in 90 g water, has a pH in the range of pH 6-8 at 25 degrees C.

Besides the improved taste, the inventors have found indications that the filled milk product of the invention may have improved nutritional properties and/or a better nutritional profile than prior art filled milk.

Additional objects and advantages of the invention are described below.

Another aspect of the invention relates to a method of producing the filled milk product as defined herein, the method comprising the steps of:
1) mixing a first ingredient containing sweet buttermilk solids, a second ingredient, and optionally also one or more further ingredients, to obtain a mixture, wherein at least one ingredient contains a vegetable lipid source, and at least one ingredient contains a first carbohydrate source,
2) optionally, subjecting the mixture to one or more subsequent processing steps, and
3) packaging the mixture of step 1) or the processed mixture of step 2).

### DETAILED DESCRIPTION OF THE INVENTION

As mentioned, an aspect of the invention relates to a powdered filled milk product comprising:
- sweet buttermilk solids in an amount of at least 5% (w/w) relative to the dry weight of the filled milk product,
- a vegetable lipid source, and
- a first carbohydrate source,
wherein said first carbohydrate source is a lactose-containing or lactose-derived carbohydrate source, or comprises or consists of milk permeate and/or milk permeate solids, or comprises or consists of whey permeate and/or whey permeate solids, or comprises a carbohydrate sweetener,. and
J wherein the filled milk product, when standardized to a solids content corresponding to 10 g powdered filled milk product in 90 g water, has a pH in the range of pH 6-8 at 25 degrees C.

In the context of the present invention, the term "dry weight" of a product relates to the weight of the product if it had been dried to a water content of 3% (w/w) water.

The contents of water in the filled milk product may be determined according to ISO 5537:2004 (Dried milk - Determination of moisture content (Reference method)) or by NMKL 110 2^{nd} Edition, 2005 (Total solids (Water) - Gravimetric determination in milk and milk products). NMKL is an abbreviation for "Nordisk Metodikkomite for Næringsmidler".

In the context of the present invention, the term "filled milk" or "filled milk product" relates to a milk product which comprises one or more non-milk lipids, e.g. one or more vegetable lipid source(s). Typically, a filled milk contains both milk lipids and non-milk lipids.

The term "buttermilk" generally relates to a number of different product types. One type is cultured skimmed-milk, i.e. skimmed-milk which is added a start culture and subsequently fermented. The "cultured skimmed-milk"-type of buttermilk has a reduced pH relative to normal milk and has acquired a bitter taste and an increased viscosity due to acidic metabolites, which have been released during the fermentation.

Another type of buttermilk is the by-product of churning cultured cream. Similar to the cultured skimmed-milk, the addition of culture to the cream makes the cream more bitter and reduces its pH. During the subsequent churning of the butter-making process "cultured cream"-type buttermilk appears as a by-product. The "cultured cream"-type buttermilk inherits some of the characteristics of the cultured cream including the reduced pH and the bitter taste.

So-called "sweet buttermilk" is a third type of buttermilk, and is the by-product of churning non-cultured cream, i.e. cream where no bacterial culture has been added before or during the churning process.

In the context of the present invention, the term "sweet buttermilk" encompasses both the by-product of churning non-cultured cream as well as such by-product which subsequently has been modified by hydrolysis of lactose.

In the context of the present invention, the term "sweet buttermilk solids" relates to the solids of sweet buttermilk, i.e. the non-volatile components of sweet buttermilk including proteins, lipids, carbohydrates and milk minerals. It should be noted that the sweet buttermilk solids need not be in solid form in the filled milk product, and particularly in the case of liquid filled milk product most of the sweet buttermilk solids, if not all, will be present in dissolved form.

The sweet buttermilk solids may e.g. contain casein in an amount in the range of 20-35% (w/w) relative to the dry weight of the sweet buttermilk solids, preferably in the range of 24-30% (w/w), and even more preferably in the range of 25-28% (w/w) relative to the dry weight of the sweet buttermilk solids.

The sweet buttermilk solids may e.g. contain alpha-lactalbumin in an amount in the range of 0.5-1.5% (w/w) relative to the dry weight of the sweet buttermilk solids, preferably in the range of 0.6-1.4% (w/w), and even more preferably in the range of 0.7-1.3% (w/w) relative to the dry weight of the sweet buttermilk solids.

The sweet buttermilk solids may e.g. contain beta-lactoglobulin in an amount in the range of 1.5-5% (w/w) relative to the dry weight of the sweet buttermilk solids, preferably in the range of 2-4% (w/w), and even more preferably in the range of 2.5-3.5% (w/w) relative to the dry weight of the sweet buttermilk solids.

The sweet buttermilk solids may e.g. contain lactose in an amount in the range of 40-60% (w/w) relative to the dry weight of the sweet buttermilk solids, preferably in the range of 45-55% (w/w), and even more preferably in the range of 47-53% (w/w) relative to the dry weight of the sweet buttermilk solids.

The sweet buttermilk solids may e.g. contain phospholipids in an amount in the range of 0.2-1.8% (w/w) relative to the dry weight of the sweet buttermilk solids, preferably in the range of 0.5-1.6% (w/w), and even more preferably in the range of 0.8-1.5% (w/w) relative to the dry weight of the sweet buttermilk solids.

The sweet buttermilk solids may e.g. contain milk fat in an amount in the range of 3-11% (w/w) relative to the dry weight of the sweet buttermilk solids, preferably in the range of 4-10% (w/w), and even more preferably in the range of 5-9% (w/w) relative to the dry weight of the sweet buttermilk solids.

The sweet buttermilk solids may e.g. contain ash, i.e. the salts and minerals, in an amount in the range of 3-11% (w/w) relative to the dry weight of the sweet buttermilk solids, preferably in the range of 4-10% (w/w), and even more preferably in the range of 5-9% (w/w) relative to the dry weight of the sweet buttermilk solids.

The sweet buttermilk solids may e.g. contain elemental calcium in an amount in the range of 0.8-1.8% (w/w) relative to the dry weight of the sweet buttermilk solids, preferably in the range of 0.9-1.7% (w/w), and even more preferably in the range of 1-1.6% (w/w) relative to the dry weight of the sweet buttermilk solids.

The sweet buttermilk solids may e.g. contain elemental phosphorous, e.g. phosphorous in an amount in the range of 0.5-1.5% (w/w) relative to the dry weight of the sweet buttermilk solids, preferably in the range of 0.6-1.4% (w/w), and even more preferably in the range of 0.7-1.3% (w/w) relative to the dry weight of the sweet buttermilk solids.

In an embodiment of the invention, the cream has not been added salt prior to or during the churning process and consequently the sweet buttermilk solids may contain sodium chloride in an amount in the range of 0-0.5% (w/w) relative to the total dry weight of the sweet buttermilk solids, preferably in the range of 0-0.5% (w/w), and even more preferably in the range of 0-0.1% (w/w) relative to the dry weight of the sweet buttermilk solids.

The pH of sweet buttermilk is typically in the range of pH 6-7, and preferably in the range of pH 6.1-6.7. It is preferred that an aqueous suspension of 10 g sweet butter milk solids in 90 g water has a pH in the range of pH 6-7 at 25 degrees C, and preferably in the range of pH 6.1-6.7 at 25 degrees C.

The filled milk product may for example comprise sweet buttermilk solids in an amount of at least 10% (w/w) relative to the dry weight of the filled milk product, such as at least 15% (w/w). In a preferred embodiment of the invention, the filled milk product comprises sweets buttermilk solids in an amount of at least 25% (w/w) relative to the dry weight of the filled milk product.

Alternatively, the filled milk product may for example comprise sweet buttermilk solids in an amount of at least 30% (w/w) relative to the dry weight of the filled milk product. In a preferred embodiment of the invention, the filled milk product comprises sweet buttermilk solids in an amount of at least 40% (w/w) relative to the dry weight of the filled milk product.

In another embodiment of the invention the filled milk product comprises sweet buttermilk solids in an amount of at least 50% (w/w) relative to the dry weight of the filled milk product, such as in an amount of at least 60% (w/w) relative to the dry weight of the filled milk product.

Typically, the filled milk product may comprise sweet buttermilk solids in an amount in the range of 5-80% (w/w) relative to the dry weight of the filled milk product, preferably in the range of 15-70% (w/w), and even more preferably in the range of 20-60% (w/w), such as in the range of 25-55% (w/w) relative to the dry weight of the filled milk product.

In an embodiment of the invention, the filled milk product comprises sweet buttermilk solids in an amount in the range of 25-80% (w/w) relative to the dry weight of the filled milk product, preferably in the range of 35-70% (w/w), and even more preferably in the range of 40-60% (w/w), such as in the range of 45-55% (w/w) relative to the dry weight of the filled milk product.

In addition to the sweet buttermilk solids, the filled milk product may also comprise one or more additional type(s) of milk solids. The milk solids preferably contain proteins. The one or more additional type(s) of milk solids may for example comprise at least one type of milk solids selected from the group consisting of non-fat milk solids, skimmed-milk solids, semi-skimmed-milk solids, whole milk solids, and a combination thereof.

The one or more additional type(s) of milk solids may comprise, or even consist of, skimmed-milk solids.

In an embodiment of the invention the filled milk product comprises the one or more additional type(s) of milk solids in an amount in the range of 0.1-70% (w/w) relative to the dry weight of the filled milk product, preferably in the range of 1-40% (w/w), and even more preferably in the range of 5-35% (w/w), such as in the range of 10-30% (w/w) relative to the dry weight of the filled milk product.

Protein is an important nutritional component of the filled milk product, and in an embodiment of the invention the filled milk product comprises a total amount of protein in the range of 5-25% (w/w) relative to the dry weight of the filled milk product. For example, the filled milk product may comprise a total amount of protein in the range of 10-20% (w/w) relative to the dry weight of the filled milk product, and preferably in the range of 12-18% (w/w), and even more preferably in the range of 15-17% (w/w) relative to the dry weight of the filled milk product.

Alternatively, the filled milk product may comprise a total amount of protein in the range of 8-16% (w/w) relative to the dry weight of the filled milk product, and preferably in the range of 9-15% (w/w), and even more preferably in the range of 10-14% (w/w) relative to the dry weight of the filled milk product.

The amount of total protein is preferably determined according to ISO 8968-3:2004 (Determination of nitrogen content Block-digestion method).

Casein is normally the predominant protein of milk products, and in an embodiment of the invention the filled milk product comprises a total amount of casein in the range of 5-20% (w/w) relative to the dry weight of the filled milk product. For example, the filled milk product may comprise a total amount of casein in the range of 6-18% (w/w) relative to the dry weight of the filled milk product, and preferably in the range of 10-16% (w/w), and even more preferably in the range of 12-13% (w/w) relative to the dry weight of the filled milk product.

Alpha-lactalbumin is one of the major milk serum proteins, and in an embodiment of the invention the filled milk product comprises a total amount of alpha-lactalbumin in the range of 0.2-0.8% (w/w) relative to the dry weight of the filled milk product. For example, the filled milk product may comprise a total amount of alpha-lactalbumin in the range of 0.3-0.7% (w/w) relative to the dry weight of the filled milk product, and preferably in the range of 0.4-0.6% (w/w) relative to the dry weight of the filled milk product.

Beta-lactoglobulin is another major type of milk serum proteins, and in an embodiment of the invention the filled milk product comprises a total amount of beta-lactoglobulin in the range of 0.5-2.5% (w/w) relative to the dry weight of the filled milk product. For example, the filled milk product may comprise a total amount of beta-lactoglobulin in the range of 1-2% (w/w) relative to the dry weight of the filled milk product, and preferably in the range of 1.2-1.6% (w/w) relative to the dry weight of the filled milk product.

In a further embodiment of the invention, the filled milk product furthermore comprises one or more additional type(s) of milk solids. Useful examples of additional protein sources are casein, caseinate, whey protein concentrate, and a combination thereof.

Carbohydrate is another important nutritional component of the filled milk product of the invention and provides both nutritional energy and sweetness to the filled milk product. In an embodiment of the invention the filled milk product comprises a total amount of carbohydrate in the range of 30-80% (w/w) relative to the dry weight of the filled milk product.

For example, the filled milk product may comprise a total amount of carbohydrate in the range of 40-70% (w/w) relative to the dry weight of the filled milk product, and preferably in the range of 50-60% (w/w) relative to the dry weight of the filled milk product.

The sweet buttermilk solids normally contain some carbohydrate, typically in the form of lactose and/or glucose and galactose, which may be provided by hydrolysing lactose.

The filled milk product of the invention contains a first carbohydrate source defined earlier and in the claims in addition to the native carbohydrate that is normally present in sweet buttermilk solids. The first carbohydrate source preferably comprises a carbohydrate sweetener. In the context of the present invention the term "carbohydrate sweetener" relates to a carbohydrate which gives rise to a sweet taste when ingested. Carbohydrate sweeteners are typically mono- or disaccharides.

The first carbohydrate source preferably comprises carbohydrate sweetener in an amount of at least 50% (w/w) relative to the dry weight of the first carbohydrate source, preferably at least 75% (w/w), and even more preferably at least 85% (w/w) relative to the dry weight of the first carbohydrate source, such as at least 90% (w/w).

While the different concentrations of the first carbohydrate source may be used, the filled milk product normally comprises first carbohydrate source in an amount in the range of 1-80% (w/w) relative to the dry weight of the filled milk product.

It may be preferred that the first carbohydrate source is a lactose-containing or lactose derived carbohydrate source, and in an embodiment of the invention the first carbohydrate source comprises a total amount of lactose, glucose, and galactose of at least 75% (w/w) relative to the dry weight of the first carbohydrate source. Even higher carbohydrate concentrations may be preferred, and the first carbohydrate source may e.g. comprise a total amount of lactose, glucose, and galactose of at least 80% (w/w) relative to the dry weight of the first carbohydrate source, such as in the range of 85-95% (w/w) relative to the dry weight of the first carbohydrate source.

In a preferred embodiment of the invention the first carbohydrate source additionally comprises milk minerals. The milk minerals have been found to improve both the taste and the nutritional value of the filled milk product, and the first carbohydrate source may e.g. comprise at least 5% milk minerals (w/w) relative to the dry weight of the first carbohydrate source. For example the first carbohydrate source may e.g. comprise milk minerals in an amount in the range of 5-20% (w/w) relative to the dry weight of the first carbohydrate source, preferably in the range of 6-15% (w/w), and even more preferably in the range of 7-10% (w/w) relative to the dry weight of the first carbohydrate source.

In a preferred embodiment of the invention, the first carbohydrate source comprises, or even consists of, milk permeate and/or milk permeate solids.

In the context of the present invention, the term "milk permeate" relates to the milk component remaining after all or a substantial portion of the milk fat and casein contained in milk, are removed. Besides water, milk permeates mainly contain lactose and milk minerals.

The terms "milk permeate solids" and "whey permeate solids" relate to the non-volatile components of milk permeate and whey permeate solids, respectively. In the context of the present invention, water is perceived as a volatile component.

The milk permeate used herein may for example be in liquid form or dried milk permeate in powder form.

In another preferred embodiment of the invention, the first carbohydrate source comprises, or even consists of, whey permeate and/or whey permeate solids.

In the context of the present invention, the term "whey permeate" relates to the whey component remaining after fat and all or a substantial portion of the proteins in whey are removed. Besides water, whey permeate mainly contains lactose and milk minerals.

The milk permeate used herein may for example be in liquid form or dried milk permeate in powder form.

In the context of the present invention, the term "powder" relates to a dry and preferably free-flowing powder. A powder preferably contains at most approx. 10% (w/w) water relative to the weight of the powder, and even more preferably at most approx. 5% (w/w) water relative to the weight of the powder.

It is furthermore envisioned that the first carbohydrate source may comprise both whey permeate and milk permeate.

In an embodiment of the invention, the first carbohydrate source comprises, or event consists of, one or more bulk sweeteners, e.g. glucose, galactose, sucrose, fructose, dextrose, maltose, maltodextrin, polydextrose, corn syrup, high-fructose corn syrup, and a combination thereof. The first carbohydrate source may e.g. comprise a total amount of the one or more bulk sweeteners in an amount in the range of 0.1-98% (w/w) relative to the dry weight of the first carbohydrate source, preferably in the range of 1-97% (w/w), and even more preferably in the range of 5-95% (w/w) relative to the dry weight of the first carbohydrate source.

In an embodiment of the invention, the filled milk product comprises a total amount of lactose, glucose, and galactose in the range of 1-80% (w/w) relative to the dry weight of the filled milk product.

For example, the filled milk product may comprise a total amount of lactose, glucose, and galactose in the range of 15-75% (w/w) relative to the dry weight of the filled milk product, preferably in the range of 25-70% (w/w), and even more preferably in the range of 40-60% (w/w) relative to the dry weight of the filled milk product.

In an embodiment of the invention the filled milk product furthermore comprises a second carbohydrate source. The second carbohydrate source preferably comprises a carbohydrate sweetener.

The second carbohydrate source preferably comprises carbohydrate sweetener in an amount of at least 50% (w/w) relative to the dry weight of the second carbohydrate source, preferably at least 75% (w/w), and even more preferably at least 85% (w/w) relative to the dry weight of the second carbohydrate source, such as at least 90% (w/w).

For example, the filled milk product may comprise the second carbohydrate source in an amount in the range of 1-75% (w/w) relative to the dry weight of the filled milk product, preferably in the range of 5-50% (w/w), and even more preferably in the range of 10-40% (w/w) relative to the dry weight of the filled milk product.

The second carbohydrate source may e.g. comprise a carbohydrate sweetener selected from the group consisting of sucrose, glucose, fructose, dextrose, galactose, lactose, maltodextrin, polydextrose, corn syrup, high-fructose corn syrup, and a combination thereof.

Lipids are yet an important nutritional component of the filled milk product and may additionally be the carrier of fat-soluble vitamins. The filled milk product of the present invention comprises a vegetable lipid source. In an embodiment of the invention, the filled milk product comprises a total amount of lipids in the range of 5-50% (w/w) relative to the dry weight of the filled milk product. For example, the filled milk product may comprise a total amount of lipids in the range of 10-40% (w/w) relative to the dry weight of the filled milk product. Alternatively, the filled milk product may comprise a total amount of lipids in the range of 12-30% (w/w). For example, the filled milk product may comprise a total amount of lipids in the range of 15-25% (w/w) relative to the dry weight of the filled milk product. The present invention also allows for low fat filled milk products. Thus, in an embodiment of the invention, the filled milk product comprises a total amount of lipids in the range of 5-15% (w/w) relative to the dry weight of the filled milk product. For example, the filled milk product may comprise a total amount of lipids in the range of 7-13% (w/w). Alternatively, the filled milk product may comprise a total amount of lipids in the range of 8-12% (w/w) relative to the dry weight of the filled milk product.

It is sometimes preferred that the lipid of the filled milk product mainly contains saturated fatty acids as this may improve the stability and shelf-life of the filled milk product. Thus, in an embodiment of the invention, the lipid of the filled milk product has an iodine value of at most 100 g I₂/100 g lipid, preferably at most 75 g I₂/100 g lipid, and even more preferably at most 60 g I₂/100 g lipid.

The filled milk product will normally contain some milk fat, which e.g. may be provided by the sweet buttermilk solids or other milk fat sources such as cream or butter. In an embodiment of the invention, the filled milk product comprises a total amount of milk fat in the range of 0.1-10% (w/w) relative to the dry weight of the filled milk product. For example, the filled milk product may comprise a total amount of milk fat in the range of 1-5% (w/w) relative to the dry weight of the filled milk product, and preferably in the range of 2-4% (w/w) relative to the dry weight of the filled milk product.

The vegetable lipid source which is characteristic for the present invention, comprises a substantial amount of lipid, and it typically comprises lipid in an amount of at least 70% (w/w) relative to the total weight of the vegetable lipid source, preferably at least 80% (w/w), and even more preferably in an amount of at least 85% (w/w) relative to the total weight of the vegetable lipid source.

In an embodiment of the invention, the vegetable lipid source comprises lipid in an amount of at least 90% (w/w) relative to the total weight of the vegetable lipid source.

The vegetable lipid source may comprise, or even consists of, a vegetable oil. Alternatively, or in addition, the vegetable lipid source may comprise, or even consist of, a vegetable fat.

Generally, the terms "fat" and "oil" relate to lipids which are in solid and liquid form, respectively, at room temperature.

In the context of the present invention, the term "fat" relates to a lipid which has a solid fat content of at least 50% (w/w) at 25 degrees C. The term "oil" relates to a lipid which has a solid fat content of less than 50% at 25 degrees C. The solid fat content may be determined according to ISO 8292-1&2:2008 or ISO 1736:2008 (Dried milk and milk products - Determination of fat content - Gravimetric method (Reference method)).

In an embodiment of the invention, the vegetable oil comprises one or more oil(s) selected from the group consisting of maize oil, sesame oil, soya bean oil, linseed oil, grapeseed oil, rapeseed oil, olive oil, groundnut oil, sunflower oil, safflower oil, and a combination thereof.

In an embodiment of the invention, the filled milk product comprises a total amount of vegetable oil in the range of 1-50% (w/w) relative to the dry weight of the filled milk product, preferably in the range of 5-40% (w/w), and even more preferably in the range of 10-30% (w/w) relative to the dry weight of the filled milk product.

As mentioned, the vegetable lipid source may comprise, or even consist of, a vegetable fat.

The vegetable fat may comprise one or more fat(s) selected from the group consisting of palm fat, palm kernel fat, and coconut fat, and a combination thereof.

Additionally, hydrogenated versions of the above-mentioned vegetable oils may also be useful as vegetable fats.

Palm fat is the presently preferred vegetable lipid source.

In an embodiment of the invention, the vegetable lipid source has an iodine value of at most 100 g I₂/100 g lipid, preferably at most 75 g I₂/100 g lipid, and even more preferably at most 60 g I₂/100 g lipid.

In an embodiment of the invention, the filled milk product comprises a total amount of vegetable fat in the range of 1-50% (w/w) relative to the dry weight of the filled milk product, preferably in the range of 5-40% (w/w), and even more preferably in the range of 10-30% (w/w) relative to the dry weight of the filled milk product.

In a preferred embodiment of the invention, the filled milk product comprises a total amount of phospholipids in the range of 0.1-2% (w/w) relative to the dry weight of the filled milk product. For example, the filled milk product may comprise a total amount of phospholipids in the range of 0.2-1.5% (w/w) relative to the dry weight of the filled milk product, preferably in the range of 0.25-1% (w/w), and even more preferably in the range of 0.4-0.7% (w/w) relative to the dry weight of the filled milk product.

In a preferred embodiment of the invention, the filled milk product comprises a total amount of phospholipids of at least 0.2% (w/w) relative to the dry weight of the filled milk product.

In another preferred embodiment of the invention, the filled milk product comprises a total amount of phospholipids of at least 0.3% (w/w) relative to the dry weight of the filled milk product.

In yet a preferred embodiment of the invention, the filled milk product comprises a total amount of phospholipids of at least 0.4% (w/w) relative to the dry weight of the filled milk product.

In an even more preferred embodiment of the invention, the filled milk product comprises a total amount of phospholipids of at least 0.5% (w/w) relative to the dry weight of the filled milk product.

In further preferred embodiments of the invention, the filled milk product comprises a total amount of phospholipids of at least 0.6% (w/w) relative to the dry weight of the filled milk product, preferably at least 0.7% (w/w), and even more preferably at least 1% (w/w), such as at least 1.5% (w/w) relative to the dry weight of the filled milk product.

The phospholipids include those commonly found in bovine and other mammalian milk. Preferred phospholipids include sphingomyelin, phosphatidyl ethanolamine, phosphatidyl choline, phosphatidyl inositol, phosphatidyl serine, and combinations thereof. Most preferred are combinations of all five phospholipids, especially such combinations in which sphingomyelin represents at least 20% (w/w) of total phospholipids.

The total amount of phospholipids may e.g. be determined according Christie et al, International Journal of Dairy Technology, Volume 40, Issue 1, Pages 10 - 12, 2007, or any other suitable method.

Phospholipids are generally perceived as health promoting agents, and the relatively high content of phospholipids of the present filled milk product is a nutritional improvement relative to the prior art filled milk.

Normally, sweet buttermilk solids inherently contain milk minerals, i.e. inorganic salts comprising elemental calcium, elemental phosphorus, elemental magnesium, and/or elemental potassium. The filled milk product of the present invention, which contains sweet buttermilk solids, therefore normally contain some milk minerals.

However, in a preferred embodiment of the invention the filled milk product furthermore comprises a first milk mineral source, i.e. an additional source of milk minerals. An example of a useful milk mineral source is the milk mineral supplement Capolac MM-0525 (Aria Foods Ingredients Amba, Denmark).

For example, the first milk mineral source may comprise elemental calcium in an amount of at least 15% (w/w) relative to the total weight of the first milk mineral source, and preferably at least 20% (w/w), and even more preferably at least 24% (w/w) relative to the total weight of the first milk mineral source.

Additionally, the first milk mineral source may comprise elemental phosphorus in an amount of at least 8% (w/w) relative to the total weight of the first milk mineral source, and preferably at least 10% (w/w), and even more preferably at least 12% (w/w) relative to the total weight of the first milk mineral source.

The filled milk product may e.g. contain ash, i.e. the salts and minerals, in an amount in the range of 1-10% (w/w) relative to the dry weight of the filled milk product, preferably in the range of 4-8% (w/w), and even more preferably in the range of 5-6% (w/w) relative to the dry weight of the filled milk product.

The filled milk product may e.g. contain elemental calcium in an amount in the range of 0.3-2% (w/w) relative to the dry weight of the filled milk product, preferably in the range of 0.5-1.5% (w/w), and even more preferably in the range of 0.7-1% (w/w) relative to the dry weight of the filled milk product.

The filled milk product may e.g. contain elemental phosphorus in an amount in the range of 0.1-1.5% (w/w) relative to the dry weight of the filled milk product, preferably in the range of 0.3-1% (w/w), and even more preferably in the range of 0.5-0.8% (w/w) relative to the dry weight of the filled milk product.

In an embodiment of the invention, the cream has not been added sodium chloride prior to or during the churning process and consequently the filled milk product may contain sodium chloride in an amount in the range of 0-0.5% (w/w) relative to the total dry weight of the filled milk product, preferably in the range of 0-0.2% (w/w), and even more preferably in the range of 0-0.1% (w/w) relative to the dry weight of the filled milk product.

The filled milk product typically comprises one or more vitamin(s). Useful vitamins are for example Vitamin A, Vitamin D, Vitamin E, Vitamin K, and/or Vitamin B₁₂.

In a preferred embodiment of the invention, the filled milk product furthermore comprises one or more flavour(s). Examples of useful flavours are cacao, chocolate and/or vanilla.

The filled milk product of the present invention is preferably sterile.

The pH of the filled milk product is preferably kept close to neutral to avoid precipitation of proteins and undesired taste-effects. In a preferred embodiment of the invention, the filled milk product, when standardized to a solids content corresponding to 10 g powdered filled milk product in 90 g water, has a pH in the range of pH 6-8 at 25 degrees C. The filled milk product may, when standardized to a solids content corresponding to 10 g powdered filled milk product in 90 g water, have a pH in the range of pH 6-7 at 25 degrees C. For example, the filled milk product may, when standardized to a solids content corresponding to 10 g powdered filled milk product in 90 g water, have a pH in the range of pH 6.1-6.7 at 25 degrees C.

The filled milk products of the present invention have been found particularly useful for incorporation into other food products such as e.g. ice cream, yoghurt, cheese, bakery products, confectionary products, and, recombined condensed milk and offer a cost-effective and convenient way of substituting milk fat of these food products with vegetable lipids.

The filled milk product is a powder. A powdered filled milk product offers several advantages relative to liquid filled milk, for example better stability and a lower weight per serving.

The powdered filled milk product may have a wide range of particle sizes, however, it is preferred that powdered filled milk product has an average particle size of in the range of 0.1 - 0.8 mm, preferably in the range of 0.2 - 0.4 mm. In an embodiment of the invention, at least 90% of the particles have a particle size of less than 0.600 mm, and at most 10% of the particles have a particle size of less than 0.100 mm.

The distribution of particle sizes is preferably measured via Low-Angle Laser Light Scattering according to International standard ISO 13320:2009.

In an embodiment of the invention, the filled milk product comprises at most 10% water (w/w) relative to the weight of the filled milk product. For example, the filled milk product may comprise at most 5% water (w/w) relative to the weight of the filled milk product, preferably at most 4% water (w/w), and even more preferably at most 2% water (w/w) relative to the weight of the filled milk product, such as at most 1% water (w/w).

In an embodiment of the invention, the powdered filled milk product comprises an emulsifier, e.g. for improving the wettability and/or dispersability of the powdered filled milk product. The emulsifier is preferably present on the surface of the particles of the powdered filled milk product.

The emulsifier may comprise one or more emulsifier(s) selected from the group consisting of lechitin, mono- and di-glycerides, citric acid esters of mono- and di-glycerides, diacetyl tartaric acid esters of mono- and di-glycerides, and a combination thereof.

The powdered filled milk product may e.g. comprise an amount of emulsifier in the range of 0.05-5% (w/w) relative to the dry weight of the powdered filled milk product, preferably in the range of 0.1-1% (w/w), and even more preferably in the range of 0.2-0.7% (w/w) relative to the dry weight of the powdered filled milk product.

It is preferred that a mixture of 10 g powdered filled milk product in 90 g water has a pH in the range of pH 6-8 at 25 degrees C, preferably in the range of pH 6-7 at 25 degrees C, and even more preferably in the range of pH 6.1-6.7 at 25 degrees C.

In an embodiment of the invention, the powdered filled milk product comprises a first particle population, wherein substantially all particles comprise sweet buttermilk solids, vegetable lipid source, and the first carbohydrate source.

In another embodiment of the invention, the powdered filled milk product comprises:
- a first particle population, wherein substantially all particles comprise sweet buttermilk solids and vegetable lipid source, and
- a second particle population, wherein substantially all particles comprise the first carbohydrate source but substantially no sweet buttermilk solids or vegetable lipid source.

Disclosed herein is a filled milk product which is a liquid. A liquid filled milk product is often perceived as more convenient in use than powdered filled milk product and is ready for ingestion.

In the case of liquid filled milk products, the filled milk product typically comprises water in an amount of at least 75% (w/w) relative to the weight of the filled milk product, and the dry weight of the filled milk product is typically at most 26% (w/w) relative to the weight of the filled milk product. For example, the filled milk product may comprise water in an amount of at least 85% (w/w) relative to the weight of the filled milk product, and the dry weight of the filled milk product may be at most 15% (w/w) relative to the weight of the filled milk product.

Disclosed herein is a filled milk product which is a concentrated filled milk product.

In the case of concentrated filled milk products, the filled milk product typically comprises water in an amount in the range of 20-74% (w/w) relative to the weight of the filled milk product, and the dry weight of the filled milk product is typically in the range of 27-82% (w/w) relative to the weight of the filled milk product. For example, the filled milk product may comprise water in an amount in the range of 40-60% (w/w) relative to the weight of the filled milk product, and the dry weight of the filled milk product may be in the range of 41-61% (w/w) relative to the weight of the filled milk product.

The liquid or concentrated filled milk product has a pH in the range of pH 6-8 at 25 degrees C, preferably in the range of pH 6-7 at 25 degrees C, and even more preferably in the range of pH 6.1-6.7 at 25 degrees C.

Yet an aspect of the invention relates to a packaged filled milk product comprising a container containing the filled milk product as described herein.

In an embodiment of the invention the filled milk product is hermetically sealed in the container.

In a preferred embodiment of the invention the gas inside the container contains at least 70% (vol/vol) inert gas relative to the total volume of gas contained in the container. Useful inert gases are e.g. N₂ or CO₂.

In another preferred embodiment of the invention the gas pressure inside the container is at most 75 kPa at 25 degrees C.

A wide range of different containers may be used to store the filled milk product. For example, the container may be a container selected from the group consisting of a bottle, a can, a bag, a pouch, and a sachet.

The container should preferably be useful for aseptic packaging.

The one or more additional ingredients may e.g. comprise flavours, e.g. in powder form or in liquid form, which may also be added during the preparation of the mixture. The same holds true for vitamins and/or milk mineral sources, e.g. in powder form or in liquid form, which also may be added during the preparation of the mixture.

In an embodiment of the invention, the mixture comprises:
- the first ingredient comprises, or even essentially consists of, sweet buttermilk solids, and
- the second ingredient comprises, or even essentially consists of, the vegetable lipid source and the first carbohydrate source.

In another embodiment of the invention, the mixture comprises:
- the first ingredient comprises, or even essentially consists of, sweet buttermilk solids and the first carbohydrate source, and
- the second ingredient comprises, or even essentially consists of, the vegetable lipid source.

In yet an embodiment of the invention, the mixture comprises:
- the first ingredient comprises, or even essentially consists of, sweet buttermilk solids and the vegetable lipid source, and
- the second ingredient comprises, or even essentially consists of, the first carbohydrate source.

In an additional embodiment of the invention, the mixture comprises:
- the first ingredient comprises, or even essentially consists of, sweet buttermilk solids,
- the second ingredient comprises, or even essentially consists of, the vegetable lipid source, and
- a third second ingredient comprises, or even essentially consists of, the first carbohydrate source.

The mixture may comprise one or more additional protein-containing milk component(s). The one or more additional protein-containing milk component(s) may for example comprise at least one component selected from the group consisting of non-fat milk powder, skimmed-milk powder, semi-skimmed-milk powder, whole milk powder, whey powder, and a combination thereof.

Thus, in an embodiment of the invention, the mixture comprises:
- the first ingredient comprises, or even essentially consists of, sweet buttermilk solids,
- the second ingredient comprises, or even essentially consists of, the vegetable lipid source, and
- a third second ingredient comprises, or even essentially consists of, the first carbohydrate source and one or more additional protein-containing milk component(s).

In another embodiment of the invention, the mixture comprises:
- the first ingredient comprises, or even essentially consists of, sweet buttermilk solids,
- the second ingredient comprises, or even essentially consists of, the vegetable lipid source and one or more additional protein-containing milk component(s), and
- a third second ingredient comprises, or even essentially consists of, the first carbohydrate source.

In yet an additional embodiment of the invention, the mixture comprises:
- the first ingredient comprises, or even essentially consists of, sweet buttermilk solids,
- the second ingredient comprises, or even essentially consists of, the vegetable lipid source,
- a third ingredient comprises, or even essentially consists of, the first carbohydrate source, and
- a fourth ingredient comprises, or even essentially consists of, one or more additional protein-containing milk component(s).

In a preferred embodiment of the invention, the method involves dry-blending of powdered ingredients, in which case the mixture is a powder. Additionally, the first ingredient containing sweet buttermilk solids may be a powder, and the second ingredient may be a powder as well. Any further ingredients may e.g. be powders too and/or in liquid form but added to the powdered ingredients by spraying the liquid ingredient, preferably without altering the powder characteristics of the mixture, i.e. the mixture is preferably still a powder after addition of the liquid ingredient.

In an embodiment of the invention, the powdered mixture comprises:
- the first ingredient which is a powder and comprises, or even essentially consists of, sweet buttermilk solids, and
- the second ingredient which is a powder and comprises, or even essentially consists of, the vegetable lipid source and the first carbohydrate source.

In another embodiment of the invention, the powdered mixture comprises:
- the first ingredient which is a powder and which comprises, or even essentially consists of, sweet buttermilk solids and the first carbohydrate source, and
- the second ingredient which is a powder and which comprises, or even essentially consists of, the vegetable lipid source.

In yet an embodiment of the invention, the powdered mixture comprises:
- the first ingredient which is a powder and which comprises, or even essentially consists of, sweet buttermilk solids and the vegetable lipid source, and
- the second ingredient which is a powder and which comprises, or even essentially consists of, the first carbohydrate source.

In an additional embodiment of the invention, the powdered mixture comprises:
- the first ingredient which is a powder and which comprises, or even essentially consists of, sweet buttermilk solids,
- the second ingredient which is a powder and which comprises, or even essentially consists of, the vegetable lipid source, and
- a third second ingredient which is a powder and which comprises, or even essentially consists of, the first carbohydrate source.

The powdered mixture may comprise one or more additional protein-containing milk component(s).

Thus, in an embodiment of the invention, the powdered mixture comprises:
- the first ingredient which is a powder and which comprises, or even essentially consists of, sweet buttermilk solids,
- the second ingredient which is a powder and which comprises, or even essentially consists of, the vegetable lipid source, and
- a third second ingredient which is a powder and which comprises, or even essentially consists of, the first carbohydrate source and one or more additional protein-containing milk component(s).

In another embodiment of the invention, the powdered mixture comprises:
- the first ingredient which is a powder and which comprises, or even essentially consists of, sweet buttermilk solids,
- the second ingredient which is a powder and which comprises, or even essentially consists of, the vegetable lipid source and one or more additional protein-containing milk component(s), and
- a third second ingredient which is a powder and which comprises, or even essentially consists of, the first carbohydrate source.

In yet an additional embodiment of the invention, the powdered mixture comprises:
- the first ingredient which is a powder and which comprises, or even essentially consists of, sweet buttermilk solids,
- the second ingredient which is a powder and which comprises, or even essentially consists of, the vegetable lipid source,
- a third ingredient which is a powder and which comprises, or even essentially consists of, the first carbohydrate source, and
- a fourth ingredient which is a powder and which comprises, or even essentially consists of, one or more additional protein-containing milk component(s).

The powdered mixture may e.g. be prepared by dry-blending the powdered ingredients in a suitable mixer, e.g. a vertical twin-shaft mixer such as the ones available from Amixon GmbH, Germany.

Emulsifier may be sprayed onto the powders during or after mixing to improve the wettability of the final filled milk product.

In a preferred embodiment of the invention, the mixture prepared in step 1) is a liquid mixture, and typically a water-containing mixture, which furthermore contains the first ingredient and the second ingredient.

In a preferred embodiment of the invention, the liquid mixture comprises substantially all ingredients necessary for producing the filled milk product and the liquid mixture has the same dry weight composition as the intended filled milk product. Additionally, the liquid mixture may have the same solids content as the intended filled milk product.

The one or more subsequent processing steps of step 2) may comprise one or more homogenisation steps. Alternatively, or additionally, the one or more subsequent processing steps of step 2) may comprise a heating step. Step 2) may for example involve a step of homogenising the mixture following by a step of heat-treating the homogenised mixture. Alternatively, Step 2) may involve a step of heat-treating the mixture following by a step of homogenising the heat-treated mixture.

Examples of additional process steps can be found in Tetra Pak Dairy processing Handbook 2003 (ISBN 91-631-3427-6) which is incorporated herein by reference for all purposes.

As mentioned, the mixture provided in step 1) comprises a first ingredient comprising sweet buttermilk solids and it comprises a vegetable lipid source, and a first carbohydrate source, and if the mixture is a liquid mixture, it typically also contains water.

The sweet buttermilk solids may be provided by sweet buttermilk powder. The first ingredient may therefore comprise, or even essentially consist of sweet buttermilk powder.

However, in a preferred embodiment of the invention, the sweet buttermilk solids of the mixture of step 1) are, at least partly, provided by native liquid sweet buttermilk, i.e. liquid sweet buttermilk obtained from the churning process without converting it to powder. The native liquid sweet buttermilk also contributes water to the mixture.. The first ingredient may therefore comprise, or even essentially consist of, liquid sweet buttermilk or a liquid concentrate thereof.

The present inventors have found that the use of native liquid sweet buttermilk directly in the mixture is particularly advantageous as it reduced the overall heat stress of the sweet buttermilk solids. The heat required to convert liquid buttermilk to powder is believed to denature and deactivate some of the active ingredients of sweet buttermilk, and by omitting this powder conversion step, typically spray-drying, the resulting filled milk product has retained more of the original bio-activity of its sweet buttermilk solids.

As mentioned, the mixture of step 1) furthermore comprises the first carbohydrate source as described herein. The first carbohydrate source may be added in the form of a powder or in the form of a liquid. The first carbohydrate source may for example form part of the first ingredient or it may be provided by another ingredient, which either comprises, or essentially consists of, the first carbohydrate source.

Liquid milk permeate or liquid whey permeate are a preferred first carbohydrate source. Liquid milk permeates or liquid whey permeates contain more milk mineral than dried, powdered permeates and therefore offer an interesting alternative to many powdered first carbohydrate sources. Additionally, the liquid permeates contribute water to the mixture of step 1).

A product obtainable by the method, where liquid milk permeate and/or liquid whey permeate forms part of the mixture of step 1), appears to present the elemental calcium in a more bio-available form than embodiments where calcium is mainly provided via a separately dried mineral powder. This is perceived as advantageous from a nutritional point of view.

An additional advantage of using native liquid buttermilk and/or liquid whey or milk permeate directly in the mixture is that part of the energy for drying the sweet buttermilk or permeate can be saved.

As said, the mixture of step 1) furthermore comprises the vegetable lipid source as described herein. The vegetable lipid source may be added in the form of a powder or in the form of a liquid. The vegetable lipid source may for example form part of the first ingredient or it may be provided by another ingredient, which either comprises, or essentially consists of, the vegetable lipid source.

The mixture of step 1) may contain any of the components mentioned herein.

The mixture may comprise sweet buttermilk solids in an amount in the range of 1-60% (w/w) relative to the weight of the mixture, preferably in the range of 4-50% (w/w), and even more preferably in the range of 10-30% (w/w) relative to the weight of the mixture.

The mixture may comprise vegetable lipid source in an amount in the range of 1-50% (w/w) relative to the weight of the mixture, preferably in the range of 5-40% (w/w), and even more preferably in the range of 10-30% (w/w) relative to the weight of the mixture.

The mixture may comprise water in an amount in the range of 10-95% (w/w) relative to the weight of the mixture, preferably in the range of 20-90% (w/w), and even more preferably in the range of 30-80% (w/w) relative to the weight of the mixture.

In an embodiment of the invention, the mixture additionally comprises the first carbohydrate source in an amount in the range of 1-95% (w/w) relative to the weight of the mixture, preferably in the range of 20-90% (w/w), and even more preferably in the range of 30-80% (w/w) relative to the weight of the mixture.

For example, the dry weight composition of the mixture may be the dry weight composition of any filled milk product described herein.

In a preferred embodiment of the invention, the mixture contains all the ingredients of the filled milk product.

In an embodiment of the invention step 2) comprises heat-treatment of the mixture. Various types of heat-treatments may be used, such as thermization (typically 57-68 degrees C for 15 sec.), pasteurisation (typically 72 degrees C for 15 sec.), UHT treatment (typically 143 degrees C for 4 sec.) or sterilization (typically 121 degrees C for 3 min.). The heat-treatment may also be part of an evaporation step, which typically is performed prior to a spray-drying process. Sterilisation or UTH treatment is particularly preferred when the filled milk product is a liquid filled milk product as it extends the shelf-life of the product beyond what can be achieved by conventional pasteurisation.

Suitable heat-treatment systems and details regarding heat-treatment can be found in Tetra Pak Dairy processing Handbook 2003 (ISBN 91-631-3427-6) which is incorporated herein by reference for all purposes.

In a preferred embodiment of the invention, step 2) comprises spray-drying the heat-treated mixture. For example, step 2) may involve the steps of homogenizing the mixture followed by heat-treating the homogenized mixture followed by spray-drying the homogenized mixture.

Step 2) may furthermore involve applying one or more emulsifier(s) to a powder for improving the wettability of the final filled milk product. The powder may be a powdered mixture prepared in step 1) or it may be the powder resulting from spray-drying a liquid mixture of step 1).

Step 3) of the method is the packaging step, where the filled milk product obtained from the previous steps is packaged in suitable containers.

The filled milk product of the invention is a powder, and therefore the packaging system should be suitable for packaging powders.

Suitable packaging systems can be found in Tetra Pak Dairy processing Handbook 2003 (ISBN 91-631-3427-6) which is incorporated herein by reference for all purposes.

A further aspect of the invention relates to a method of producing the filled milk product as defined herein, the method comprising the steps of:
a) providing a mixture comprising sweet buttermilk solids, a vegetable lipid source, and water,
b) heat-treating the mixture,
c) packaging a filled milk product comprising the product of step b), which filled milk product contains sweet buttermilk solids, the vegetable lipid source, and a first carbohydrate source.

The method may comprise additional steps. For example, the method may comprise one or more homogenisation steps. The mixture of step a) may e.g. be homogenised before the heat-treatment of step b). Alternatively, or in addition, the product of step b) may be homogenised before the packaging of step c). Examples of additional process steps can be found in Tetra Pak Dairy processing Handbook 2003 (ISBN 91-631-3427-6) which is incorporated herein by reference for all purposes.

As said, the mixture provided in step a) comprises sweet buttermilk solids, a vegetable lipid source, and water.

The sweet buttermilk solids may be provided by sweet buttermilk powder. However, in a preferred embodiment of the invention, the sweet buttermilk solids of the mixture of step a) are, at least partly, provided by native liquid sweet buttermilk, i.e. liquid sweet buttermilk obtained from the churning process without converting it to powder. The native liquid sweet buttermilk also contributes water to the mixture.

The present inventors have found that the use of native liquid sweet buttermilk directly in the mixture is particularly advantageous as it reduced the overall heat stress of the sweet buttermilk solids. The heat required to convert liquid buttermilk to powder is believed to denature and deactivate some of the active ingredients of sweet buttermilk, and by omitting this powder conversion step, typically spray-drying, the resulting filled milk product has retained more of the original bio-activity of its sweet buttermilk solids.

In a preferred embodiment of the invention, the mixture of step a) furthermore comprises the first carbohydrate source as described herein. The first carbohydrate source may be added in the form of a powder or in the form of a liquid.

Liquid milk permeate or liquid whey permeate are a preferred first carbohydrate source. Liquid milk permeates or liquid whey permeates contain more milk mineral than dried, powdered permeates and therefore offer an interesting alternative to many powdered first carbohydrate sources. Additionally, the liquid permeates contribute water to the mixture of step a).

A product obtainable by the method, where liquid milk permeate and/or liquid whey permeate forms part of the mixture of step a), appears to present the elemental calcium in a more bio-available form than embodiments where calcium is mainly provided via a separately dried mineral powder. This is perceived as advantageous from a nutritional point of view.

An additional advantage of using native liquid buttermilk and/or liquid whey or milk permeate directly in the mixture is that part of the energy for drying the sweet buttermilk or permeate can be saved.

The mixture of step a) may contain any of the components mentioned herein.

The mixture may comprise sweet buttermilk solids in an amount in the range of 1-60% (w/w) relative to the weight of the mixture, preferably in the range of 4-50% (w/w), and even more preferably in the range of 10-30% (w/w) relative to the weight of the mixture.

The mixture may comprise vegetable lipid source in an amount in the range of 1-50% (w/w) relative to the weight of the mixture, preferably in the range of 5-40% (w/w), and even more preferably in the range of 10-30% (w/w) relative to the weight of the mixture.

The mixture may comprise water in an amount in the range of 10-95% (w/w) relative to the weight of the mixture, preferably in the range of 20-90% (w/w), and even more preferably in the range of 30-80% (w/w) relative to the weight of the mixture.

In an embodiment of the invention, the mixture additionally comprises a first carbohydrate source in an amount in the range of 1-95% (w/w) relative to the weight of the mixture, preferably in the range of 20-90% (w/w), and even more preferably in the range of 30-80% (w/w) relative to the weight of the mixture.

For example, the dry weight composition of the mixture may be the dry weight composition of any filled milk product described herein.

Any additional ingredients such as flavours, e.g. in powder form or in liquid form, may also be added to the mixture of step a). The same holds true for vitamins and/or mineral sources, e.g. in powder form or in liquid form, which also may be added to the mixture of step a).

In a preferred embodiment of the invention, the mixture contains all the ingredients of the filled milk product.

Step b) of the method comprises heat-treatment of the mixture. Various types of heat-treatments may be used such as thermization (typically 57-68 degrees C for 15 sec.), pasteurisation (typically 72 degrees C for 15 sec.), UHT treatment (typically 143 degrees C for 4 sec.) or sterilization (typically 121 degrees C for 3 min.). The heat-treatment may also be part of an evaporation step, which typically is performed prior to a spray-drying process.

Suitable heat-treatment systems and details regarding heat-treatment can be found in Tetra Pak Dairy processing Handbook 2003 (ISBN 91-631-3427-6) which is incorporated herein by reference for all purposes.

In a preferred embodiment of the invention, step b) of the method furthermore comprises spray-drying the heat-treated mixture.

In an embodiment of the invention the first carbohydrate source is added to the product of step b). The "product of step b)" may be a liquid product if no spray-drying was performed, or a powdered product if step b) involves spray-drying.

In another embodiment of the invention the first carbohydrate source in powder form is added to the product of step b). This embodiment is particular interesting if the product of step b) also is in powder form. In this way powdered particles comprising sweet buttermilk solids and vegetable lipid source are dry-mixed with particles containing the first carbohydrate source.
In yet an embodiment of the invention the first carbohydrate source in liquid form is added to the product of step b).

Additional ingredients such as flavours, e.g. in powder form or in liquid form, may also be added to the product of step b). The same holds true for vitamins and/or milk mineral sources, e.g. in powder form or in liquid form, which also may be added to the product of step b).

Step c) of the method is the packaging step, where the filled milk product obtained from the previous steps is packaged in suitable containers.

The filled milk product is a powder.

Suitable packaging systems can be found in Tetra Pak Dairy processing Handbook 2003 (ISBN 91-631-3427-6) which is incorporated herein by reference for all purposes.

Yet an aspect of the invention relates to a product obtainable by the methods described herein.

Yet an aspect of the present disclosure relates to the use of the combination of sweet buttermilk solids and a first carbohydrate source for improving the taste of a filled milk product, wherein the filled milk product comprises sweet buttermilk solids in an amount of at least 5% (w/w) relative to the dry weight of the filled milk product. The filled milk product may e.g. comprise sweet buttermilk solids in an amount of at least 25% (w/w) relative to the dry weight of the filled milk product.

The inventors have particularly seen indications that filled milk product is improved with respect to one or more of the following parameters: more sweetness, more mineral flavour, more milkiness, and more white colour.

Other potentially relevant organoleptic parameters are e.g. colour, brightness, glossy appearance, smoothness, cooked taste, chalky, milky/creamy taste, bitter taste, acid taste, salt taste, and mouthfeel.

A further aspect of the invention relates to the use of the combination of sweet buttermilk solids and a first carbohydrate source for improving the nutritional value of a filled milk product, wherein the filled milk product comprises sweet buttermilk solids in an amount of at least 5% (w/w) relative to the dry weight of the filled milk product, such as at least 25% (w/w).

### EXAMPLES

### Example 1: Preparation of Dry Blended Filled Milk (comparative)

Initial dry blending tests were carried out mixing 62 - 64 % (w/w) Filled milk powder (in compliance with Codex STAN 251-2006) with 36 - 38 (w/w) % of
a) Whey permeate powder (Variolac 830, Aria Foods amba),
b) Lactose (Variolac 992 in compliance with Codex STAN 212-1999, Aria Foods amba),
c) Sucrose (Danisco White Sugar in EU Category 2 quality), and
d) Equal amounts of lactose and sucrose.

The resulting 4 powders had the following approximate composition: 15 % protein, 56 - 61 % carbohydrates, 17 - 18 % fat, 3.6 - 6.6 % ash and 98 % total solids.

When freshly dissolved in water, the organoleptic quality of these powder products was not accepted in internal evaluations.

### Example 2: Preparation of Ultra High Temperature (UHT) treated Filled Milk Alternative in liquid form (not according to the present invention)

### Liquid A

1.4 kg sweet buttermilk powder and 80 g of sucrose were mixed into 8.1 kg of milk permeate concentrate with approximately 15.5 % dry matter and approximately 11 kg of water. 0.4 kg of melted palm fat was added gently at approximately 60°C. The mixture was homogenized at 150 bar and pasteurized using a Plate Heat Exchanger at 72°C for 15 sec prior to ultra high temperature (UHT) treatment at 140 °C for 3-4 seconds. The UHT treatment capacity was approximately 20 l/hour. After the UHT treatment the mixture was cooled to approximately 75 °C, homogenized using a two step process at 150 bar and subsequently 50 bar, and bottled aseptically.

A liquid was obtained with the following approximate composition: 2.2 % protein, 7.9 % carbohydrates, 2.2 % fat, 0.8 % ash and 13.5 % total solids.

### Liquid B

1.6 kg of sweet buttermilk powder and 95 g sucrose were mixed into 7.6 kg of milk permeate concentrate with approximately 15.5 % dry matter and approximately 14 kg of water. 0.7 kg of melted palm fat was added gently at approximately 60 °C. The processing followed the above description for Liquid A. A liquid was obtained with the following approximate composition: 2.2 % protein, 7.1 % carbohydrates, 3.1 % fat, 0,75 % ash and 13.5 % total solids.

### Liquid C

1.9 kg of sweet buttermilk powder and 105 g sucrose were mixed into 7.0 kg of milk permeate concentrate with app. 15.5 % dry matter and app. 17 kg of water. 1.1 kg of melted palm fat was added gently at app. 60 °C. The processing followed the above description for Liquid A.

A liquid was obtained with the following composition: 2.2 % protein, 6.4 % carbohydrates, 3.9 % fat, 0.7 % ash and 13.5 % total solids.

### Liquid D

2.7 kg of sweet buttermilk powder, 150 g sucrose and 600 g lactose were mixed into 5.1 kg of milk permeate concentrate with app. 15.5 % dry matter and app. 29 kg of water. 1.5 kg of melted palm fat was added gently at app. 60 °C. The processing followed the above description for Liquid A.

A liquid was obtained with the following composition: 2.2 % protein, 6.6 % carbohydrates, 4.0 % fat, 0.6 % ash and 13.5 % total solids.

### Example 3: Preparation of Filled Milk Alternative in powder form

### Powder A

11.4 kg of sweet buttermilk powder and 0.6 kg of sucrose were mixed into 61 kg of milk permeate concentrate with app 15.5 % dry matter. 3.3 kg of melted palm fat was gently added to this mixture at 60 °C prior to homogenization (a two step homogenisation step at 150/50 bar as described in Example 1), pasteurization (72 °C for 15 sec) and drying. The capacity of the pilot dryer was 10 - 12 l/h water evaporation. The spray drying parameters comprised air temperatures of 200 °C (in) and 85 - 87 °C (out).

A powder was obtained with the following approximate composition: 17 % protein, 58 % carbohydrates, 16 % fat, 6.5 % ash and 97.5 % total solids.

### Powder B

11.6 kg of sweet buttermilk powder and 0.6 kg of sucrose were mixed into 40 kg of milk permeate concentrate with app 15.5 % dry matter. 6.3 kg of melted palm fat was gently added to this mixture at 60 °C. Further process conditions followed the above description for Powder A.

A powder was obtained with the following approximate composition: 17 % protein, 48 % carbohydrates, 27 % fat, 5.6 % ash and 97.6 % total solids.

### Example 4: Preparation of Filled Milk Alternative in powder form

### Powder C

48.2 ton sweet buttermilk was mixed with 250 kg sucrose and 23.7 ton milk permeate concentrate with approximately 15.5 % dry matter. The standardized milk was pasteurized (75 °C for 15 sec) and evaporated to reach approximately 41 % total solids. 1260 kg palm fat was mixed in-line with the milk concentrate and preheated to approximately 75 °C before the final mix with approximately 48 % total solid was homogenized using a two step process at 90/20 bar prior to drying: The spray drying parameters comprised air temperatures of 190 °C (in) and 87 °C (out). The drying was performed in a multistage dryer with integrated fluid bed and equipped with a vibro fluidizer. The powder was lecithinated with 0.5 % Lecithin entered between the integrated fluid bed and the vibro fluidizer to obtain an instant product.

A powder was obtained with the following approximate composition: 16 % protein, 59 % carbohydrates, 16 % fat, 6.5 % ash and 97.5 % total solids.

### Example 5: Preparation of Filled Milk Alternative in liquid form (not according to the present invention)

### Liquid 1

1.3 kg of sweet buttermilk powder, 1 kg of whey permeate powder with approximately 89 % lactose and 70 g of sucrose were dissolved in 17 kg of water previously heated to a temperature well above the melting point of palm fat, i.e. app. 50 °C. 0.4 kg of melted palm fat was added slowly during gentle mixing. The mixture was homogenized at 200 bar and preheated to approximately 70 °C prior to UHT treatment at 140 °C for 3-4 seconds. The UHT treatment had a capacity of approximately 20 l/hour. After the UHT treatment the mixture was cooled to approximately 75 °C, homogenized in a two step process at 190/50 bar and bottled aseptically.

A liquid was obtained with the following approximate composition: 2.2 % protein, 7.7 % carbohydrates, 2.1 % fat, 0.6 % ash and 13 % dry matter.

### Liquid 2

1.3 kg of sweet buttermilk powder, 1 kg of whey permeate powder with approximately 83 % lactose and 70 g of sucrose were dissolved in 17 kg of water previously heated to a temperature well above the melting point of palm fat, i.e. approximately 50 °C. 0.4 kg of melted palm fat was added slowly during gentle mixing. The further processing followed the above description for Liquid 1.

A liquid was obtained with the following approximate composition: 2.3 % protein, 7.7 % carbohydrates, 2.0 % fat, 0.8 % ash and 13 % dry matter.

### Liquid 3

1.3 kg of sweet buttermilk powder, 1 kg of whey permeate powder with approximately 83 % lactose, but with an altered mineral composition compared to the product used for the above described production of liquid 1 and liquid 2 and 70 g of sucrose were dissolved in 17 kg of water previously heated to a temperature well above the melting point of palm fat, i.e. app. 50 °C. 0.4 kg of melted palm fat was added slowly during gentle mixing. The further processing followed the above description for Liquid 1.

A liquid was obtained with the following approximate composition: 2.3 % protein, 7.6 % carbohydrates, 2.2 % fat, 0.9 % ash and 13 % dry matter.

### Liquid 4

1.3 kg of sweet buttermilk powder and 1.4 kg of lactase treated whey permeate slurry with app. 70 % dry matter of which 84 % carbohydrates and 70 % lactose were dissolved in 17 kg of water previously heated to a temperature well above the melting point of palm fat, i.e. approximately 50 °C. 0.4 kg of melted palm fat was added slowly during gentle mixing. The mixture was pH adjusted with a diluted solution of sodium hydroxide as required to a pH of 6.8 prior to further processing following the above description for Liquid 1.

A liquid was obtained with the following approximate composition: 2.2 % protein, 7.7 % carbohydrates, 2.1 % fat, 0.9 % ash and 14 % dry matter.

### Example 6: Preparation of ice cream using the present filled milk product

Ice cream containing the filled milk of the invention may e.g. be prepared by the following process.

An aqueous phase is prepared by mixing 22.4 kg fresh dairy cream containing 36% fat, preheated to 50-55 degrees C, 2.8 kg invert sugar preheated to 50-55 degrees C, 1.4 kg of powder C of Example 4 and 1.4 kg water preheated to 50-55 degrees C. in a jacketed kettle maintained at 50-55 degrees C. After pasteurization at 82 degrees C for 25 s, the aqueous phase can be cooled to 4-6 degrees C. and stored until further use and then heated up in a plate heat exchanger to 40 degrees C, or if used directly, brought to 40 degrees C.

A fat phase is separately prepared by mixing 9 kg sunflower oil heated at 40 degrees C, 2.28 kg anhydrous butter oil melted at 40 degrees C and 0.3 kg polyglycerol polyricinoleate and 0.42 kg distilled unsaturated monoglyceride melted at 40 degrees C.

The aqueous phase is progressively (fine flow) added to the fat phase in a jacketed kettle with a U-shape stirring rod and mixed under high speed (about 70 rpm), thus forming a water-in-oil pre-emulsion. The agitation is continued at the same speed for 20 min., and then the agitation speed is decreased to about half the previous speed. The pre-emulsion is then transferred through a static mixer to form a fine emulsion. The fine emulsion is subsequently cooled to a temperature of -4 degrees C, allowed to age for 3-4 hours, and finally extruded into ice cream stick bars, which are cooled to a temperature of approx. -25 degrees C.

In a separate kettle 59.7 kg of dark chocolate premelted at 40 degrees C is mixed with 0.3 kg soya lecithin and the mixture is pumped into the final mixing tank containing the emulsion while mixing until homogeneous. The finished coating can be kept at about 35 degrees C with slow agitation until ready for dipping ice cream bars.

Extruded ice cream stick bars with 80-100% overrun at a temperature of about -25 degrees C are dipped into the above final coating at 35-40 degrees C. After a certain time to allow the coating to set, the finished product is individually wrapped in flow packs and stored at -18 degrees C.

### Example 7: Sensory profiling of filled milk products

The sensory profile of the Filled Milk products described above was compared to the sensory profile of Whole milk powders using Guidelines in the International standards ISO 4121:2003 and ISO 8586-1:1993 and herein referenced other International standards as a basis. The organoleptic descriptors used included colour, glossy appearance, cooked taste, chalky mouthfeel, milky/creamy taste, sweet taste, bitter taste, acid taste, mineral/salt taste, general mouthfeel.

10 trained assessors took part in the above profiling which provided the overall result that the above described Filled Milk products were comparable to Whole Milk powders for most parameters, including milky/cooked flavour and aroma, and differed for two parameters only: sweetness and mineral aroma, i.e. the above described Filled Milk products were reported to be more sweet and to have a more pronounced mineral flavour and aroma, two parameters that are known to be appreciated in the prospective markets for these products.

Sensory profiling of prior art Filled Milk products have been compared to the sensory profile of Whole Milk powders using the same guidelines and procedure as described above. However, here the overall result indicated that the prior art Filled Milk products were comparable to Whole Milk powders regarding sweetness and mineral aroma and most other parameters, but that they differed for two attributes: milkiness and colour, i.e. the prior art Filled Milk product were reported to be less milky and also slightly more grey than Whole Milk powder.

The filled milk product of the present invention therefore appears to provide a better taste than the prior art products.

### Example 8: Organoleptic tests of Liquid A

The taste of Liquid A was compared to known Filled Milk powders and Whole milk powders in another set of sensory tests. All tests were carried out as triangle tests and test results were evaluated according to the sensory analysis methodology laid down in the International standards ISO 4120:2007 (Sensory Analysis - Methodology - Triangle test). Liquid A was compared to different types of milk powders already marketed in the chosen test areas, i.e. Filled Milk powders in compliance with Codex STAN 251-2006 or Whole milk powder in compliance with Codex STAN 207-1999. 50 persons participated in the tests.

All tests were carried out on UHT products and freshly dissolved powder products.

The above results clearly indicate a preference for Liquid A compared to prior art Filled Milk as well as to Whole Milk products thus clearly demonstrating the organoleptic benefits achieved by the milk of the present invention.

### Example 9: Organoleptic test - mouthfeel

The following three filled milk products were prepared in order to evaluate the mouthfeel and its dependence on the used type of milk powder and the content of vegetable fat. A creamy, full-bodied mouthfeel is a desirable attribute for a filled milk product whereas a thin or watery mouthfeel typically is associated with a product of poor quality.

The composition of the products used in the test is described in table 1.

**Table 1 Recipe of the filled milk powders used in the tests of Example 9.**

| Ingredients | Product | | |
|---|---|---|---|
| | Powder 1 | Powder 2 | Powder 3 |
| Sweet buttermilk | 48.2 tons | | |
| Skimmed milk | | 48.2 tons | 48.2 tons |
| milk permeate (approx. 15.5% solids) | 23.7 tons | 23.7 tons | 22.7 tons |
| Palm fat | 1.25 ton | 1.25 ton | 2.2 tons |
| Sucrose | 0.25 ton | 0.25 ton | 0.25 ton |

The powdered filled milk products Powder 1, Powder 2 and Powder 3 were prepared using the same process as described in the context of Powder C (see above).

The filled milk sample based on Powder 1 was compared to the filled milk samples based on Powder 2 and Powder 3 in a new sensory test focussing on mouthfeel. The test was carried out as a quantitative response test, and the test results were evaluated according to the sensory analysis methodology laid down in the international standard ISO 4121:2003 norm. 10 persons participated in the test. The test was performed on freshly dissolved powder products (32 g powder and 240 mL water).

The results of the above-mentioned test showed a significantly better mouthfeel of the filled milk sample based on Powder 1 compared to the prior art filled milk samples based on Powder 2 and Powder 3, even though the sample Powder 3 had a higher fat content than Powder 1. We may therefore conclude that the use of significant amounts of sweet buttermilk solids in filled milk products results in products having a creamier, more full-bodied mouthfeel than conventional filled milk products.

### Example 10: Organoleptic test - after-taste

The filled milk samples based on Powder 1, Powder 2, and Powder 3 of Example 9 and an additional sample based on Powder 4 (see below) were subjected to a sensory test focussing on the after-taste of the samples. After-taste is the taste intensity of the filled milk which is perceived immediately after that filled milk is removed from the mouth and a long after-taste is perceived as attractive.

The filled milk Powder 4 was prepared by dry-mixing 540 kg conventional, skimmed-milk based filled milk powder, with 109 kg sweet buttermilk powder and 351 kg whey permeate powder, and the resulting filled milk contained approx. 11% (w/w) sweet buttermilk solids.

The sensory test procedures were the same as in Example 9.

The results are summarised in table 2:

**Table 2 Results of the sensory analysis.**

| Sample | Perceived aftertaste (-, +, ++, +++) |
|---|---|
| Powder 1 | +++ |
| Powder 2 | + |
| Powder 3 | + |
| Powder 4 | ++ |

The filled milk samples containing sweet buttermilk solids (P1 and P4) surprisingly had a more intense aftertaste than the conventional filled milk samples based on skimmed-milk.

### Example 11: Stability test

The long-term stability of the powdered filled milk products was tested by subjecting them to a 19 month extended stability test, during which the powders were kept at 35 degrees C.

Three powders were tested:
- Powder 1 of example 9 (sweet buttermilk-based filled milk)
- Powder 5 resembling P2, with the exception that 50% of the skimmed milk used for preparing P2 was replaced by sweet buttermilk.
- Powder 2 of Example 9 (conventional, skimmed milk-based filled milk)

Samples of the three powders were packaged in bags of three-layer alufoil (polyester, aluminium, and polyethylene) under inert atmosphere (90% N₂ (vol/vol) and 10% CO₂ (vol/vol)) and stored in a controlled environment having a temperature of 35 degrees C.

The stability of the samples was evaluated using visual inspection, and sensory testing which particularly focussed on the presence of off-taste. The sensory testing was performed using the same procedures as mentioned in Example 9.

The results are summarised in table 3.

**Table 3 Results of the stability testing. "n.d." = not detected.**

| Sample | 12 months | | | 18 month | | |
|---|---|---|---|---|---|---|
| | Off-taste | Whiteness | Lumpiness | Off-taste | Whiteness | Lumpiness |
| Powder 1 | n.d. | ++ | - | - | + | - |
| Powder 5 | n.d. | ++ | - | - | + | -- |
| Powder 2 | - | ++ | -- | --- | ++ | --- |

The filled milk samples containing sweet buttermilk solids (Powder 1 and Powder 5) turned out to be less prone to the development of off-taste and contained a lower degree of lumps in the powder. This is seen as a clear indication that sweet buttermilk-containing filled milk products have a better stability under high temperature storage than conventional, skimmed milk-based filled milk.

## Claims

1. A filled milk product comprising:
- sweet buttermilk solids in an amount of at least 5% (w/w) relative to the dry weight of the filled milk product,
- a vegetable lipid source, and
- a first carbohydrate source, wherein said first carbohydrate source is a lactose-containing or lactose derived carbohydrate source; or
said first carbohydrate source comprises, or even consists of, milk permeate and/or milk permeate solids, or
said first carbohydrate source comprises, or even consists of, whey permeate and/or whey permeate solids, or
said first carbohydrate source comprises a carbohydrate sweetener,
wherein the filled milk product, when standardized to a solids content corresponding to 10 g powdered filled milk product in 90 g water, has a pH in the range of pH 6-8 at 25 degrees C,
and wherein the filled milk product is a powder.

2. The filled milk product according to claim 1, furthermore comprising one or more additional type(s) of milk solids, wherein the one or more additional type(s) of milk solids comprises at least one type of milk solids selected from the group consisting of non-fat milk solids, skimmed-milk solids, semi-skimmed-milk solids, whole milk solids, and a combination thereof.

3. The filled milk product according to any of the preceding claims furthermore comprising a total amount of casein in the range of 5-20% (w/w) relative to the dry weight of the filled milk product and/or a total amount of alpha-lactalbumin in the range of 0.2-0.8% (w/w) relative to the dry weight of the filled milk product and/or a total amount of beta-lactoglobulin in the range of 0.5-2.5% (w/w) relative to the dry weight of the filled milk product.

4. The filled milk product according to claim 1 or 2, furthermore comprising a protein source, wherein the protein source is selected from the group consisting of casein, caseinate, whey protein concentrate and a combination thereof.

5. The filled milk product according to any of claims 1 to 4, wherein the first carbohydrate source comprises a total amount of lactose, glucose and galactose of at least 75% (w/w) relative to the dry weight of the first carbohydrate source.

6. The filled milk product according to any of the preceding claims, furthermore comprising a second carbohydrate source, wherein the second carbohydrate source comprises a carbohydrate sweetener selected from the group consisting of sucrose, glucose, fructose, dextrose, galactose, lactose, maltodextrin, polydextrose, corn syrup, high-fructose corn syrup, and a combination thereof.

7. The filled milk product according to any of the preceding, wherein the vegetable lipid source comprises a vegetable oil and/or a vegetable fat, wherein the vegetable oil is selected from the group consisting of corn oil, sesame oil, soy bean oil, linseed oil, grapeseed oil, rapeseed oil, olive oil, peanut oil, sunflower oil, safflower oil and a combination thereof, and wherein the vegetable fat is selected from the group consisting of palm fat, coconut fat, palm kernel fat, and a combination thereof.

8. The filled milk product according to any of the preceding claims, comprising a total amount of phospholipids of at least 0.2% (w/w) relative to the dry weight of the filled milk product.

9. The filled milk product according to any of the preceding claims comprising a phospholipid selected from the group consisting of sphingomyelin, phosphatidyl ethanolamine, phosphatidyl choline, phosphatidyl inositol, phosphatidyl serine, and combinations thereof.

10. The filled milk product according to any of the preceding claims, furthermore comprising a first milk mineral source selected from the group consisting of elemental calcium, elemental phosphorous, elemental magnesium, elemental potassium, and combinations thereof.

11. A packaged filled milk product comprising a container containing the filled milk product according to any of the preceding claims.

12. The packaged filled milk product according to claim 11, wherein the filled milk product is hermetically sealed in the container.

13. A method of producing the filled milk product according to any of the preceding claims, the method comprising the steps of:
1) mixing a first ingredient containing sweet buttermilk solids, a second ingredient, and optionally also one or more further ingredients, to obtain a mixture, wherein at least one ingredient contains a vegetable lipid source, and at least one ingredient contains a first carbohydrate source,
2) optionally, subjecting the mixture to one or more subsequent processing steps, and
3) packaging the mixture of step 1) or the processed mixture of step 2).

14. A product obtainable by the method of claim 13.

## Patentansprüche

1. Filled milk-Produkt, umfassend:
- süße Buttermilchfeststoffe in einer Menge von wenigstens 5 % (w/w), relativ zu dem Trockengewicht des filled milk-Produkts,
- eine pflanzliche Fettquelle, und
- eine erste Kohlenhydratquelle, wobei
die erste Kohlenhydratquelle eine laktoseenthaltende oder von Laktose abgeleitete Kohlenhydratquelle ist; oder
die erste Kohlenhydratquelle Milchpermeat und/oder Milchpermeatfeststoffe umfasst oder sogar aus diesen besteht, oder
die erste Kohlenhydratquelle Molkepermeat und/oder Molkepermeatfeststoffe umfasst oder sogar aus diesen besteht, oder
die erste Kohlenhydratquelle einen Kohlenhydrat-Süßstoff umfasst,
wobei das filled milk-Produkt, wenn es auf einen Feststoffgehalt genormt wird, der 10 g pulverförmigen filled milk-Produkt in 90 g Wasser entspricht, einen pH-Wert im Bereich von pH-Wert 6-8 bei 25 °C aufweist,
und wobei das filled milk-Produkt ein Pulver ist.

2. Filled milk-Produkt nach Anspruch 1, weiter umfassend einen oder mehrere zusätzliche(n) Typ(en) von Milchfeststoffen, wobei der eine oder die mehreren zusätzliche(n) Typ(en) von Milchfeststoffen wenigstens einen Typ von Milchfeststoffen umfasst/umfassen, der ausgewählt ist, aus der Gruppe, bestehend aus fettfreien Milchfeststoffen, entrahmten Milchfeststoffen, teilentrahmten Milchfeststoffen, Vollmilchfeststoffen und einer Kombination davon.

3. Filled milk-Produkt nach Anspruch 1, weiter umfassend eine Gesamtmenge an Kasein im Bereich von 5-20 % (w/w), relativ zu dem Trockengewicht des filled milk-Produkts und/oder eine Gesamtmenge an Alpha-Lactalbumin im Bereich von 0,2-0,8 % (w/w), relativ zu dem Trockengewicht des filled milk-Produkts und/oder eine Gesamtmenge an Beta-Lactoglobulin im Bereich von 0,5-2,5 % (w/w), relativ zu dem Trockengewicht des filled milk-Produkts.

4. Filled milk-Produkt nach Anspruch 1 oder 2, weiter umfassend eine Proteinquelle, wobei die Proteinquelle ausgewählt ist, aus der Gruppe, bestehend aus Casein, Caseinat, Molkeproteinkonzentrat und einer Kombination davon.

5. Filled milk-Produkt nach einem der Ansprüche 1 bis 4, wobei die erste Kohlenhydratquelle eine Gesamtmenge an Laktose, Glucose und Galaktose von wenigstens 75% (w/w), relativ zu dem Trockengewicht der ersten Kohlenhydratquelle umfasst.

6. Filled milk-Produkt nach einem der vorhergehenden Ansprüche, weiter umfassend eine zweite Kohlenhydratquelle, wobei die zweite Kohlenhydratquelle einen Kohlenhydrat-Süßstoff umfasst, der ausgewählt ist, aus der Gruppe, bestehend aus Saccharose, Glucose, Fruktose, Dextrose, Galaktose, Laktose, Maltodextrin, Polydextrose, Kornsirup, Kornsirup mit hohem Fruktosegehalt und einer Kombination davon.

7. Filled milk-Produkt nach einem der vorhergehenden Ansprüche, wobei die die pflanzliche Lipidquelle ein pflanzliches Öl und/oder ein pflanzliches Fett umfasst, wobei das pflanzliche Öl ausgewählt ist, aus der Gruppe, bestehend aus Kornöl, Sesamöl, Sojabohnenöl, Leinöl, Traubenkernöl, Rapsöl, Olivenöl, Erdnussöl, Sonnenblumenöl, Distelöl und einer Kombination davon, und wobei das pflanzliche Fett ausgewählt ist, aus der Gruppe, bestehend aus Palmfett, Kokosfett, Palmkernfett und einer Kombination davon.

8. Filled milk-Produkt nach einem der vorhergehenden Ansprüche, umfassend eine Gesamtmenge an Phospholipiden von wenigstens 0,2% (w/w), relativ zu dem Trockengewicht des filled milk-Produkts.

9. Filled milk-Produkt nach einem der vorhergehenden Ansprüche, umfassend ein Phospholipid, das ausgewählt ist, aus der Gruppe, bestehend aus Sphingomyelin, Phosphatidylethanolamin, Phosphatidylcholin, Phosphatidylinositol, Phosphatidylserin und Kombinationen davon

10. Filled milk-Produkt nach einem der vorhergehenden Ansprüche, weiter umfassend eine erste Milchmineralquelle, die ausgewählt ist, aus der Gruppe, bestehend aus elementarem Calcium, elementarem Phosphor, elementarem Magnesium, elementarem Kalium und Kombinationen davon.

11. Verpacktes filled milk-Produkt, umfassend einen Behälter, der das filled milk-Produkt nach einem der vorhergehenden Ansprüche enthält.

12. Verpacktes filled milk-Produkt nach Anspruch 11, wobei das filled milk-Produkt in dem Behälter hermetisch verschlossen ist.

13. Verfahren zur Herstellung des filled milk-Produkts nach einem der vorhergehenden Ansprüche, wobei das Verfahren die Schritte umfasst:
1) Mischen eines ersten Bestandteils, der süße Buttermilchfeststoffe enthält, eines zweiten Bestandteils und gegebenenfalls auch eines oder mehreren weiteren Bestandteilen, um eine Mischung zu erhalten, wobei wenigstens ein Bestandteil eine pflanzliche Lipidquelle enthält und wenigstens ein Bestandteil eine erste Kohlenhydratquelle enthält,
2) gegebenenfalls Unterziehen der Mischung einen oder mehreren nachfolgenden Verarbeitungsschritten, und
3) Verpacken der Mischung von Schritt 1) oder der verarbeiteten Mischung von Schritt 2).

14. Produkt, erhältlich durch das Verfahren nach Anspruch 13.

## Revendications

1. Produit laitier reconstitué comprenant :
- des solides de babeurre doux en quantité d'au moins 5 % (en p/p) par rapport au poids à sec du produit laitier reconstitué,
- une source de lipide végétal et
- une première source d'hydrate de carbone, dans lequel :
ladite première source d'hydrate de carbone est une source d'hydrate de carbone contenant du lactose ou tirée du lactose ; ou
ladite première source d'hydrate de carbone comprend ou est même constituée de perméat de lait et/ou de solides de perméat de lait ou
ladite première source d'hydrate de carbone comprend ou est même constituée de perméat de petit lait et/ou de solides de perméat de petit lait ou
ladite première source d'hydrate de carbone comprend un édulcorant d'hydrate de carbone,
dans lequel le produit laitier reconstitué, lorsqu'il est standardisé à un teneur en solides correspondant à 10 g de produit laitier reconstitué en poudre dans 90 g d'eau, a un pH dans la plage de pH de 6 à 8 à 25 degrés C et dans lequel le produit laitier reconstitué est une poudre.

2. Produit laitier reconstitué selon la revendication 1, comprenant en outre un ou plusieurs types supplémentaires de solides de lait, dans lequel les un ou plusieurs types supplémentaires de solides de lait comprennent au moins un type de solides de lait choisi dans le groupe constitué de solides de lait sans graisse, de solides de lait écrémé, de solides de lait semi-écrémé, de solides de lait entier et d'une de leurs combinaisons.

3. Produit laitier reconstitué selon l'une quelconque des revendications précédentes, comprenant en outre une quantité totale de caséine dans la plage de 5 à 20 % (en p/p) par rapport au poids à sec du produit laitier reconstitué et/ou une quantité totale d'alpha-lactalbumine dans la plage de 0,2 à 0,8 % (en p/p) par rapport au poids total du produit laitier reconstitué et/ou une quantité totale de bêta-lactoglobuline dans la plage de 0,5 à 2,5 % (en p/p) par rapport au poids à sec du produit laitier reconstitué.

4. Produit laitier reconstitué selon la revendication 1 ou 2, comprenant en outre une source de protéine, dans lequel la source de protéine est choisie dans le groupe constitué de la caséine, du caséinate, d'un concentré de protéine de petit lait et d'une de leurs combinaisons.

5. Produit laitier reconstitué selon l'une quelconque des revendications 1 à 4, dans lequel la première source d'hydrate de carbone comprend une quantité totale de lactose, de glucose et de galactose d'au moins 75 % (en p/p) par rapport au poids à sec de la première source d'hydrate de carbone.

6. Produit laitier reconstitué selon l'une quelconque des revendications précédentes, comprenant en outre une seconde source d'hydrate de carbone, dans lequel la seconde source d'hydrate de carbone comprend un édulcorant d'hydrate de carbone choisi dans le groupe constitué du saccharose, du glucose, du fructose, du dextrose, du galactose, du lactose, de la maltodextrine, du polydextrose, du sirop de maïs, du sirop de maïs à forte teneur en fructose et d'une de leurs combinaisons.

7. Produit laitier reconstitué selon l'une quelconque des revendications précédentes, dans lequel la source de lipide végétal comprend une huile végétale et/ou une graisse végétale, dans lequel l'huile végétale est choisie dans le groupe constitué de l'huile de maïs, de l'huile de sésame, de l'huile de haricots de soja, de l'huile de lin, de l'huile de pépins de raisin, de l'huile de colza, de l'huile d'olive, de l'huile d'arachide, de l'huile de tournesol, de l'huile de carthame et d'une de leurs combinaisons et dans lequel la graisse végétale est choisie dans le groupe constitué de la graisse de palme, de la graisse de coco, de la graisse de palmiste et d'une de leurs combinaisons.

8. Produit laitier reconstitué selon l'une quelconque des revendications précédentes, comprenant une quantité totale de phospholipides d'au moins 0,2 % (en p/p) par rapport au poids à sec du produit laitier reconstitué.

9. Produit laitier reconstitué selon l'une quelconque des revendications précédentes, comprenant un phospholipide choisi dans le groupe constitué de la sphingomyéline, de la phosphatidyl éthanolamine, de la phosphatidyl choline, du phosphatidyl inositol, de la phosphatidyl sérine et de leurs combinaisons.

10. Produit laitier reconstitué selon l'une quelconque des revendications précédentes, comprenant en outre une première source minérale de lait choisie dans le groupe constitué du calcium élémentaire, du phosphore élémentaire, du magnésium élémentaire, du potassium élémentaire et de leurs combinaisons.

11. Produit laitier reconstitué emballé comprenant un récipient contenant le produit laitier reconstitué selon l'une quelconque des revendications précédentes.

12. Produit laitier reconstitué emballé selon la revendication 11, dans lequel le produit laitier reconstitué est hermétiquement scellé dans le récipient.

13. Procédé de production du produit laitier reconstitué selon l'une quelconque des revendications précédentes, le procédé comprenant les étapes consistant à :
1) mélanger un premier ingrédient contenant des solides de babeurre doux, un deuxième ingrédient et éventuellement aussi un ou plusieurs autres ingrédients pour obtenir un mélange, dans lequel au moins un ingrédient contient une source de lipide végétale et au moins un ingrédient contient une première source d'hydrate de carbone,
2) éventuellement soumettre le mélange à une ou plusieurs étapes de traitement ultérieures et
3) emballer le mélange de l'étape 1) ou le mélange traité de l'étape 2).

14. Produit susceptible d'être obtenu par le procédé de la revendication 13.
